(19) Europäisches Patentamt
European Patent Office
Office européen des brevets

(11) **EP 4 621 226 B1**

(12) **EUROPÄISCHE PATENTSCHRIFT**

(45) Veröffentlichungstag und Bekanntmachung des Hinweises auf die Patenterteilung:
**24.06.2026 Patentblatt 2026/26**

(21) Anmeldenummer: **23000053.1**

(22) Anmeldetag: **24.03.2023**

(51) Internationale Patentklassifikation (IPC):
*F04B 27/04* (2006.01) *F04B 53/14* (2006.01)
*F04B 53/16* (2006.01) *F16J 15/26* (2006.01)
*F04B 39/00* (2006.01) *F16J 15/18* (2006.01)

(52) Gemeinsame Patentklassifikation (CPC):
**F04B 39/0022; F04B 27/0442; F04B 53/146;
F04B 53/164; F16J 15/18; F16J 15/26**

(54) **KOLBENVERDICHTER**

PISTON COMPRESSOR

COMPRESSEUR À PISTON

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **14.04.2022 DE 102022001448**

(43) Veröffentlichungstag der Anmeldung:
**24.09.2025 Patentblatt 2025/39**

(73) Patentinhaber: **Borsig ZM Compression GmbH 08393 Meerane (DE)**

(72) Erfinder:
• **Ziermann, Andi**
 **08058 Zwickau (DE)**
• **Baumann, Heinz**
 **8400 Winterthur (CH)**

(74) Vertreter: **Radünz, Ingo Schumannstrasse 100 40237 Düsseldorf (DE)**

(56) Entgegenhaltungen:
WO-A1-97/06343    WO-A1-98/31936
DE-A1- 3 310 184    DE-T5- 112015 000 585
FR-A- 1 133 277    US-A- 3 776 558

EP 4 621 226 B1

**Beschreibung**

Die Erfindung bezieht sich auf einen Kolbenverdichter umfassend ein Kurbelgehäuse, eine darin angeordnete Kurbelwelle, Pleuelstangen, Kreuzkopf mit angebrachter Kolbenstange, an der mindestens ein Kolben befestigt ist, der in einem Zylinder trockenlaufend geführt ist, sowie Ventile und mindestens eine Kolbenstangendichteinrichtung, die um die Kolbenstange zwischen Zylinder und Kurbelgehäuse angeordnet ist.

Ölfreie oder trockenlaufende Hochdruck-Kolbenverdichter werden für die Verdichtung von Gasen eingesetzt. Üblicherweise sind die Kolbenverdichter mehrstufig und doppeltwirkend ausgelegt, so dass die Unterseite der Kolben ebenso zur Verdichtung wie die Oberseite benutzt wird.

Aus DE 10 2004 052 168 A1 ist ein Linearverdichter bekannt. Zur Verdichtung von Gasen werden vor allem Kolbenverdichter eingesetzt. Bei doppeltwirkenden Kompressoren sind die Hauptbestandteile des Verdichters ein Kurbelgehäuse, eine darin angeordnete Kurbelwelle, mindestens ein Zylinder, Pleuelstangen, Kreuzkopf mit Kolbenstange, an welcher mindestens ein Kolben befestigt ist, Haupt- und Pleuellager sowie Dichtelemente und Ventile. Bei solchen trockenlaufenden Verdichtern werden durch hohe Kolbengeschwindigkeit vor allem Kolben- und Führungsringe sowie eine Kolbenstangendichtung durch Reibung mit einer unerwünscht hohen Temperatur belastet, was die Lebensdauer der Dichtringe erheblich beeinträchtigt.

Aus DE 10 2004 011 410 B4 ist ein Kolbenkompressor bekannt, der eine Kolbenstangendichtung zur Abdichtung einer oszillierenden Kolbenstange aufweist, wobei zwischen der Kolbenstange und einer Lauffläche im Dichtungsgehäuse mehrere Dichtungselemente angeordnet sind, die auf dem Außenumfang der Kolbenstange montiert und an der Lauffläche im Dichtungsgehäuse oder an der Lauffläche einer im Dichtungsgehäuse angeordneten Laufbuchse abdichtend angebracht sind, wobei die Lauffläche zur Erhöhung der Verschleißfestigkeit oberflächenbehandelt sein kann.

Weiter ist aus EP 2 594 795 A1 eine Vorrichtung zum Verdichten eines gasförmigen oder aus gasförmigen und flüssigen Bestandteilen bestehenden Fluids bekannt, bei dem das Fluid von einem Kompressor angesaugt und dort in einem Verdichtungsraum verdichtet wird, wobei in den Verdichtungsraum während des Verdichtens Flüssigkeit eingeführt wird.

Weiterhin ist aus DE 10 2013 002 864 A1 ein flüssigkeitsgekühlter, doppelwandiger, ein- oder mehrstufiger Kolbenverdichter mit mindestens einem Kolben zum Komprimieren eines Mediums bekannt, der mit einem linear oszillierenden Antrieb über eine Kolbenstange verbunden ist. Der Kolben ist in einem Zylinder axial bewegbar angeordnet, der kolbenseitig und kurbelseitig mit Zylinderdeckeln versehen ist. Die Mittel zur Flüssigkeitskühlung umfassen einen doppelwandig geformten Zylinder, an dessen dem Kolben zugewandten Seite eine oder mehrere Kühlöffnungen vorgesehen sind, über welche das den doppelwandigen Zylinder durchströmende Kühlmittel in Kontakt mit dem Bereich des Zylinders kommt.

Ein Kurbelgehäuse ist üblicherweise nur beschränkt druckdicht. Doppeltwirkende Zylinder sind deshalb gegen das Kurbelgehäuse durch Kolbenstangendichtungen oder Stopfbüchsen umfangreich abzudichten.

Die herkömmlichen Stopfbüchsen in ölfreien Verdichtern sind aus Dichtringen aufgebaut, die aus Polymeren gefertigt sind. Die Dichtringe liegen an der Kolbenstange an und werden durch Druck, der bei Verdichtung entsteht, gegen die Kolbenstange gedrückt. Solche Druckkräfte gegen die hin-und hergehende Kolbenstange erzeugen hohe Reibenergie und starken Verschleiß an Dichtelementen und der Kolbenstange.

Bei einer geforderten Betriebsweise eines Kompressors für zu erzeugende hohe Drücke versucht man den Verschleiß an den Stopfbüchselementen durch sehr aufwendige Stopfbüchssysteme mit spezieller Kühlung so klein wie möglich zu halten.

Aus WO 9831936 A1 ist ein Kompressor bekannt, der mindestens einen Zylinder und einen in dem Zylinder trockenlaufend geführten Kolben umfasst, der mit einem Zylindereinsatz einen jeweils über den gemeinsamen Längenabschnitt offenen Ringspalt begrenzt, der eine Leckströmung des verdichteten Mediums zulässt. Der Kolben ist über eine Kolbenstange mit einem in Richtung der Längsachse verschiebbar geführten Stützteil gekoppelt, das mit einer Antriebseinrichtung verbunden ist. Die Kolbenstange wirkt mit dem Kolben und dem Stützteil über stirnseitige konvexe Stützflächen zusammen, die quer zur Längsachse verlaufende Relativbewegungen des Stützteils gegenüber dem Kolben zulassen.

Ein weiterer bekannter Kolbenverdichter ist in Dokument DE 33 10 184 A1 offenbart; der Kompressor dieses Dokuments umfasst unter anderem nicht die Merkmale, dass eine Stopfbuchse mit einer Kolbenstange einen jeweils über den gemeinsamen Längenabschnitt offenen, μm-engen Dichtspalt begrenzt, der einen Spaltleckstrom des verdichteten Mediums zulässt; dass der resultierende Wärmeausdehnungskoeffizient der Stopfbuchse und des Stopfbuchsenmantels im Wesentlichen den Wärmeausdehnungskoeffizienten des Werkstoffs der Kolbenstange aufweist; und dass die Stopfbuchsenvorrichtung querkraftfrei auf einem Stopfbuchsenflansch mit einer Vielzahl von Kugelelementen abgestützt ist, die um eine vertikale Achse der Kolbenstange herum zwischen einem beweglichen Zwischenring und einem fixierten Ring angeordnet sind.

Als besonders nachteilig hat sich bei trockenlaufenden Kompressoren oder Verdichtern herausgestellt, wenn durch hohe Kolbengeschwindigkeit vor allem Kolben- und Führungsringe sowie eine Kolbenstangendichtung durch Reibung mit einer unerwünscht hohen Temperatur belastet werden. Aufgrund der Belastung durch Reibung mit unerwünscht auftretenden hohen Temperaturen wird die Lebensdauer von Dichtringen erheblich gesenkt.

Die Aufgabe der Erfindung besteht darin, einen weiter entwickelten Kolbenkompressor für hohe Drücke zu schaffen, der für Ausführungen mit wählbaren Abmessungen innerhalb einer relativ großen Bandbreite geeignet und in einer einfachen Bauweise kostengünstig herstellbar ist, die mit geringem baulichen Aufwand bei relativ langhubigen Ausführungen die Bildung einer trockenlaufenden Ringspaltdichtung für eine Kolbenstangendichtung ermöglicht, die eine konstante Leckströmung sicherstellt.

Die zugrundeliegende Aufgabe wird erfindungsgemäß durch die Merkmale von Patentanspruch 1 gelöst.

Es hat sich als besonders vorteilhaft herausgestellt, dass die Kolbenstangendichteinrichtung für die Kolbenstangendichtung als Stopfbüchsvorrichtung ausgeführt ist, die in einem Stopfbüchsgehäuse angeordnet ist, das in einem Kolbenverdichtergehäuse eingebracht ist. Die Stopfbüchsvorrichtung besteht aus einer Stopfbüchse und einem Stopfbüchsmantel, in welchen die Stopfbüchse eingeschoben ist.

Die Stopfbüchse bildet mit der Kolbenstange vorteilhaft einen jeweils über den gemeinsamen Längenabschnitt offenen, wenige um-engen Dichtspalt, der einen Spaltleckstrom des verdichteten Mediums zulässt.

Die Stopfbüchse und der Stopfbüchsmantel bestehen jeweils aus verschiedenen Werkstoffen, deren gemeinsamer resultierender Wärmeausdehnungskoeffizient in vorteilhafter Weise im wesentlichen den Wärmeausdehnungskoeffizienten des Werkstoffs der Kolbenstange aufweist.

Die Stopfbüchsvorrichtung ist vorteilhaft mit einem beweglichen Zwischenring bündig und dicht abschließend verbunden. Der Zwischenring ist vorteilhafterweise in einer Ausnehmung des Stopfbüchsgehäuses zwischen der Stopfbüchsvorrichtung und einem in der Ausnehmung des Stopfbüchsgehäuses angeordneten Kippstiftgehäuse angebracht.

Die Stopfbüchsvorrichtung steht über den Zwischenring und das Kippstiftgehäuse vorteilhaft mit einem Ring in Verbindung, der in einer Ausnehmung eines Stopfbüchsflansches angeordnet ist, der fest mit dem Stopfbüchsgehäuse und dem Kolbenverdichtergehäuse verbunden ist.

Die Stopfbüchsvorrichtung ist mit der Stopfbüchse über den Zwischenring vorteilhaft querkraftfrei auf dem Stopfbüchsflansch mit einer Vielzahl von Kugelelementen abgestützt, die um eine vertikale Achse der Kolbenstange zwischen dem beweglichen Zwischenring und dem fixierten Ring angeordnet sind.

Weiter ist in einer Ausnehmung des Zwischenrings ein Kippring angeordnet, der vorteilhaft die Stopfbüchsvorrichtung ein Nachstellen einer Schrägstellung der Kolbenstange ohne eine nennenswerte Krafteinwirkung der Kolbenstange auf die Stopfbüchsvorrichtung zulässt.

Die Stopfbüchsvorrichtung ist querkraftfrei auf dem Stopfbüchsflansch in vorteilhafter Weise mit einer Vielzahl von Kippstiften abgestützt, die um eine vertikale Achse der Kolbenstange zwischen dem beweglichen Zwischenring und dem fixierten Ring planetenartig angeordnet sind.

Die Kippstifte weisen bevorzugt eine Länge eines vorbestimmten Kugeldurchmessers auf und sind mit bombierten Enden mit einem Radius von der halben Länge eines Kippstiftes ausgeführt. Weiterhin sind die Kippstifte im druckabgewandten Bereich elastisch mit einem geeigneten Elastomer, wie ein kurzes Stück eines flexiblen Schlauchs, ummantelt und elastisch positioniert.

Die Stopfbüchsvorrichtung ist mit dem Zwischenring vorteilhaft bündig und dicht abschließend über einen in einer Nut in einer Stirnfläche des Kippstiftgehäuses angeordneten Dichtring verbunden.

Der Zwischenring ist vorteilhafterweise gehärtet und geschliffen und lässt sich mit der Stopfbüchsvorrichtung querkraftfrei transversal bewegen.

Der Zwischenring lässt weiterhin vorteilhaft eine auf die Stopfbüchsvorrichtung ausgeübte Axialkraft auf die Kippstifte übertragen, die wie Kugelelemente zwischen dem Zwischenring und dem gehärteten Ring bewegbar angeordnet sind.

Der Kippring weist auf seinen Stirnseiten bevorzugt einen sehr großen Wölbungsradius auf, der tonnenartig gewölbt ist, wobei die Achsen der Tonnenwölbungen auf beiden Stirnseiten des Kipprings um 90° gegeneinander versetzt sind.

Weiter hat sich als vorteilhaft gezeigt, dass der Kippring die Stopfbüchsvorrichtung eine Schiefstellung der Kolbenstange, hervorgerufen durch eine Querbewegung der Kolbenstange, ohne nennenswerte Krafteinwirkung zwischen der Stopfbüchsvorrichtung und der Kolbenstange nachführen lässt.

Weiterhin hat sich als besonders vorteilhaft herausgestellt, dass der Kippring geringe Nickbewegungen der Stopfbüchsvorrichtung in alle Richtungen zulässt.

Weitere Vorteile und Einzelheiten der Erfindung sind in der Beschreibung anhand von in der Zeichnung schematisch dargestellten Ausführungsbeispielen näher erläutert. Es zeigen:

Fig. 1 einen schematischen Kolbenverdichter im Schnitt in verkleinertem Maßstab gemäß der Erfindung und eine Einzelheit Z im vergrößerten Maßstab;

Fig. 2 ein Ausführungsbeispiel nach der Einzelheit Z einer Kolbenstangendichteinrichtung mit Spaltringdichtung im Schnitt eines Kolbenverdichters gemäß Fig. 1 nach der Erfindung und einen Schnitt I-I in Draufsicht;

Fig. 3 ein Ausführungsbeispiel einer Kolbenstangendichteinrichtung mit Spaltringdichtung und einem Kippring im Schnitt gemäß Fig. 2 nach der Erfindung;

Fig. 4. eine Darstellung eines Kipprings im Schnitt nach einem Ausführungsbeispiel einer Kolbenstangendichteinrichtung gemäß Fig. 3 nach der Erfindung;

Fig. 5 eine schematische Darstellung einer Abstützung eines Zwischenrings mit Kugeln im Schnitt nach einem Ausführungsbeispiel einer Kolbenstangendichteinrichtung gemäß Fig. 2 nach der Erfindung;

Fig. 6 eine schematische Darstellung einer Abstützung eines Zwischenrings mit Stiften im Schnitt nach einem Ausführungsbeispiel einer Kolbenstangedichteinrichtung gemäß Fig. 2 nach der Erfindung und

Fig. 7 eine Darstellung einer Abstützung eines Zwischenrings mit Stiften in elastischer Lagerung im Schnitt nach einem Ausführungsbeispiel einer Kolbenstangedichteinrichtung gemäß Fig. 2 nach der Erfindung.

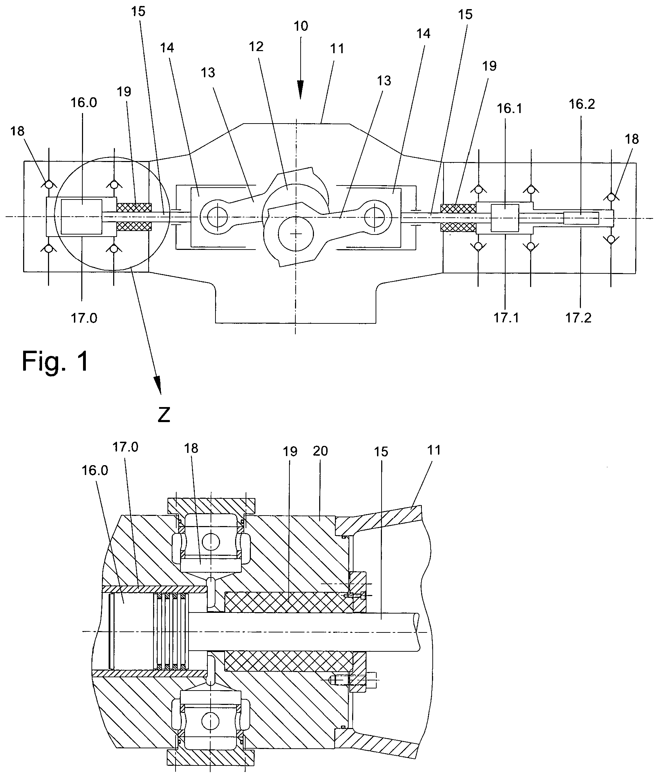

In **Fig. 1** ist schematisch ein Kolbenverdichter 10 gezeigt, der ein Kurbelgehäuse 11 mit einer Kurbelwelle 12 umfasst sowie Pleuelstangen 13 und mindestens einen Kreuzkopf 14 mit an dem Kreuzkopf jeweils angebrachter Kolbenstange 15, an welcher jeweils Kolben 16.0, 16.1 und 16.2 befestigt sind. Die Kolben 16.0, 16.1 sind in doppeltwirkenden Zylindern 17.0, 17.1 und der Kolben 16.2 ist in einem einfachwirkenden Zylinder 17.2 axial bewegbar angeordnet. Weiterhin sind Ventile 18 für ein Ansaugen oder Auslassen von Gasen und jeweils eine Kolbenstangendichteinrichtung 19 bei den doppeltwirkenden Zylindern 17.0 und 17.1 für eine Abdichtung der Kolbenstange 15 gegenüber dem Kurbelgehäuse 11 angebracht.

In der Einzelheit Z sind im vergrößerten Maßstab mit Abbruchlinie das Kurbelgehäuse 11, die angeordnete Kolbenstange 15 und der an der Kolbenstange befestigte Kolben 16.0 dargestellt. Der Kolben 16.0 ist im Zylinder 17.0 beweglich geführt. Weiterhin sind die Ventile 18 und die Kolbenstangendichteinrichtung 19 gezeigt, die in einem Kolbenverdichtergehäuse 20 um die Kolbenstange 15 angeordnet ist.

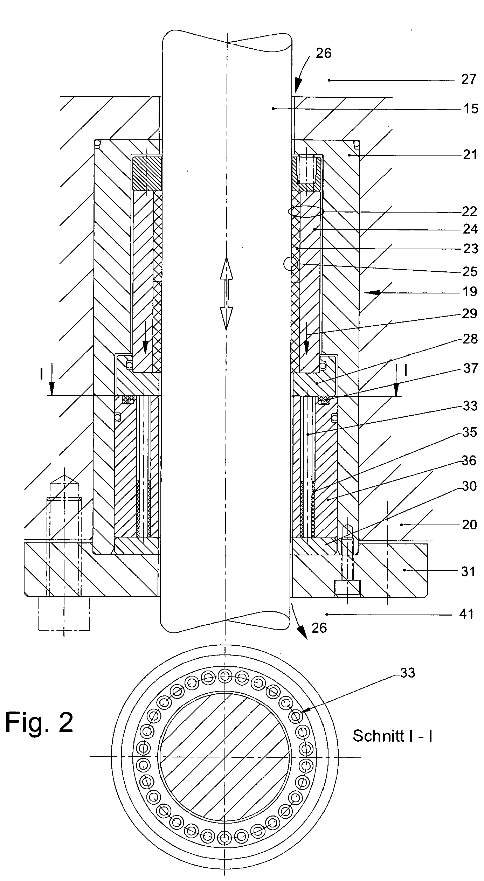

**Fig. 2** zeigt ein Ausführungsbeispiel der Kolbenstangendichteinrichtung 19 mit Spaltringdichtung im Schnitt eines Kolbenverdichters 10 gemäß der Einzelheit Z nach Fig. 1. Die Kolbenstange 15 ist im angedeuteten Kolbenverdichtergehäuse 20 angeordnet, in welchem ein Stopfbüchsgehäuse 21 für die Kolbenstangendichteinrichtung 19 eingebracht ist. Die Kolbenstangendichteinrichtung 19 umfasst eine Stopfbüchsvorrichtung 22, die aus einem Stopfbüchsmantel 24 und einer darin eingeschobenen Stopfbüchse 23 zusammengesetzt ist. Die Stopfbüchse 23 der Stopfbüchsvorrichtung 22 berührt die Oberfläche der Kolbenstange 15 mit Spiel von wenigen $\mu$m über einen angedeuteten Dichtspalt 25, der zwischen der Oberfläche der Kolbenstange 15 und der Stopfbüchse 23 ausgebildet ist.

Eine Spaltringdichtung ist eine Strömungsdichtung. Durch jeweils einen Pfeil ist ein Spaltleckstrom 26 von geringer Größe angedeutet. Etwa 3% der Fördermenge eines Verdichters beträgt die Größe des Spaltleckstroms, der sich in dem Dichtspalt 25 bildet, der zwischen der hin- und hergehenden Kolbenstange 15 und der Stopfbüchse 23 ausgebildet ist. Der Spaltleckstrom 26 dichtet eine Spaltringdichtung gegenüber hohen Druckdifferenzen ab, die zwischen einem Zylinderdruck 27 und einem Druck 41 im Kurbelgehäuse 11 jeweils vorherrschen, wobei sich der Druck des Spaltleckstroms 26 kontinuierlich über die gesamte Länge des Dichtspalts 25 abbaut.

Die Stopfbüchse 23 der Stopfbüchsvorrichtung 22 weist gegenüber der Kolbenstange 15 üblicherweise ein Fertigungsspiel von etwa 15 $\mu$m auf. Die Stopfbüchse 23 besteht vorzugsweise aus einem CF-PEEK-Material (Carbon-Fiber-PolyEther-Ether-Keton) und liegt mit Spiel auf der Oberfläche der Kolbenstange 15 auf. Die Stopfbüchse 23 ist in dem Stopfbüchsmantel 24 eingepresst, der aus einem Stahl gefertigt ist. Die Stopfbüchse 23 sowie der Stopfbüchsmantel 24 sind aus Werkstoffen hergestellt, welche die Stopfbüchse auf der Oberfläche gegenüberliegend der Kolbenstange 15 annähernd die gleiche Wärmeausdehnung aufweisen lässt wie die Oberfläche der Kolbenstange 15. Die Pressung zwischen der Stopfbüchse 23 aus Kohlefaser-PEEK-Material und dem Stopfbüchsmantel 24 ist temperaturabhängig und lässt sich innerhalb vorbestimmter Temperaturbereiche von zulässigen Betriebszuständen im wesentlichen konstant aufrechterhalten.

Eine Spaltringdichtung funktioniert praktisch reibungsfrei und ist demzufolge für ölfreie oder trockenlaufende Kolbenverdichter zur Abdichtung von hohen Druckdifferenzen von üblicherweise 150 bar und höher besonders geeignet.

Die Stopfbüchsvorrichtung 22 ist, wie durch einen Pfeil angedeutet, mit einer Axialkraft 29 beaufschlagt, die sich aus einem Differenzdruck ergibt, der sich aus einem vorherrschenden Zylinderdruck 27 im Zylinder 17 und aus einem vorhandenen Druck 41 im Kurbelgehäuse 11 bildet. Im Innenraum des Dichtspalts 25 herrschen aufgrund des Druckabbaus im Dichtspalt nicht so hohe Drücke. Durch den Druckunterschied wird die Stopfbüchsvorrichtung 22 zusammengedrückt, und der Dichtspalt 25 verringert sich mit zunehmendem Zylinderdruck 27. Der Dichtspalt 25 und die Stopfbüchse 23 kommunizieren oder interagieren miteinander, und der Dichtspalt weist stets eine Weite von etwa einem (1) $\mu$m zwischen Oberfläche der Kolbenstange 15 und der gegenüberliegenden Oberfläche der Stopfbüchse auf.

Die hin- und hergehende Kolbenstange 15 bewegt sich auch leicht quer zur gedachten Zylinderachse.

Die Stopfbüchsvorrichtung 22, die mit der Stopfbüchse 23 mit einem Spiel von etwa zwei (2)μm auf der Kolbenstange 15 aufliegt, muss solchen leichten Querbewegungen folgen können, und zwar ohne große oder nennenswerte Krafteinwirkung der Kolbenstange 15 auf die Stopfbüchse 23.

Die Stopfbüchsvorrichtung 22 ist mit einem Zwischenring 28 verbunden. Der Zwischenring 28 ist in einer Ausnehmung des Stopfbüchsgehäuses 21 beweglich angeordnet. In der Ausnehmung des Stopfbüchsgehäuses 21 ist hinter dem Zwischenring 28 ebenfalls ein Kippstiftgehäuse 36 eingebracht. Der Zwischenring 28 ist mit der Stopfbüchsvorrichtung 22 bündig und dicht abschließend angebracht. Die Stopfbüchsvorrichtung 22 ist mit der Axialkraft 29 beaufschlagt und lässt einen Druck über den Zwischenring 28 und das Kippstiftgehäuse 36 auf einen Ring 30 ausüben, der in einer Ausnehmung eines Stopfbüchsflansches 31 angeordnet ist. Der Stopfbüchsflansch 31 ist fest mit dem Stopfbüchsgehäuse 21 und dem Kolbenverdichtergehäuse 20 verbunden.

Wenn der Zwischenring 28 und der Ring 30 direkt aufeinander liegen würden, dann müsste eine Haftreibung für eine Querverschiebung der Stopfbüchsvorrichtung 22 überwunden werden.

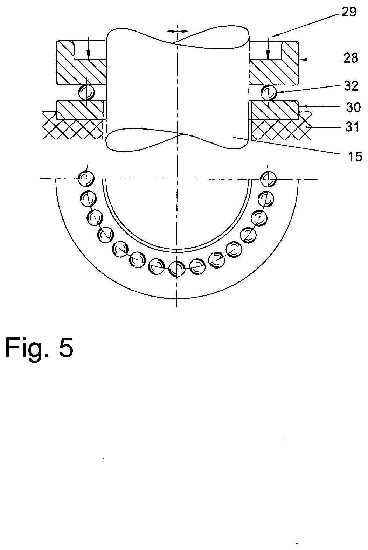

Eine Haftreibung für eine Querverschiebung der Stopfbüchsvorrichtung 22 wird durch Anordnung einer Vielzahl von sogenannten Kugelelementen 32 oder Kippstiften 33 im Kippstiftgehäuse 36 vermieden. Die Kugelelemente 32 oder Kippstifte 33 sind um eine vertikale Achse der Kolbenstange 15 zwischen dem beweglichen Zwischenring 28 und dem fixierten Ring 30 planetenartig angeordnet, wie in **Fig. 2 und Fig. 5** gezeigt und in einem Schnitt I-I bzw. Halbschnitt in Draufsicht dargestellt. Die Kippstifte 33 sind im unteren Teil auf der Seite gegenüber dem Ring 30 mit einem flexiblen Elastomer 35 ummantelt.

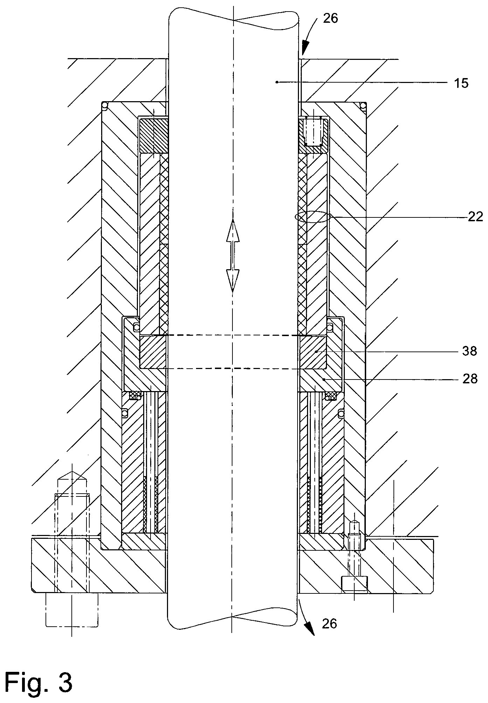

Wie in **Fig. 3** gezeigt, ist ein Kippring 38 zwischen Stopfbüchsvorrichtung 22 und Zwischenring 28 in einer Ausnehmung des Zwischenrings angeordnet. Der Kippring 38 lässt die Stopfbüchsvorrichtung 22 eine Schiefstellung der Kolbenstange 15 durch eine Querbewegung der Kolbenstange ohne nennenswerte Krafteinwirkung zwischen der Stopfbüchsvorrichtung und der Kolbenstange nachführen.

Der Kippring 38 ist vergleichbar mit einem Kreuzgelenk. Der Kippring 38 kann lediglich Druckkräfte in axialer Richtung übertragen. Geringe Nickbewegungen der Stopfbüchsvorrichtung 22 lässt der Kippring 38 in alle Richtungen zu.

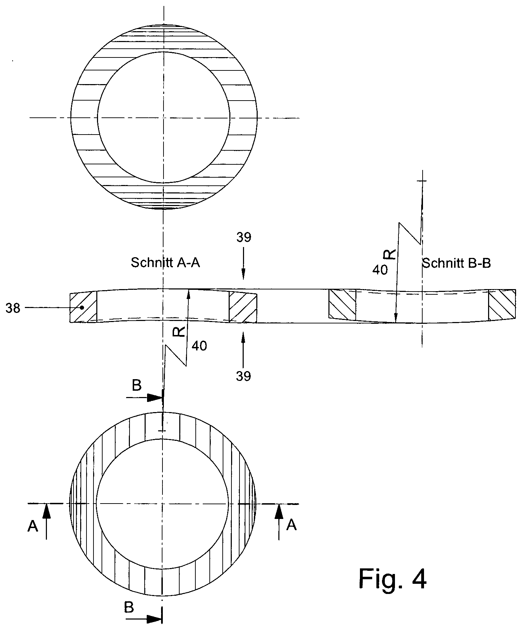

In **Fig. 4** ist ein schematisches Bild eines Kippringes 38 in Draufsicht und im um 90° jeweils gedrehten Schnitt A-A und Schnitt B-B in Seitenansicht gezeigt. Stirnseiten 39 des Kipprings 38 sind mit sehr grossem Wölbungsradius 40 tonnenartig gewölbt. Die Achsen der Tonnenwölbungen auf beiden Stirnseiten des Kippringes 38 sind um 90° gegeneinander versetzt.

Die Kugelelemente 32 sind im einfachsten Fall Kugeln, wie in **Fig. 5** dargestellt. Die Kugeln sind zwischen dem Zwischenring 28 und dem im Stopfbüchsflansch 31 angeordneten Ring 30 angeordnet und um die Kolbenstange 15 positioniert wie aus dem Halbschnitt ersichtlich.

Die über den Zwischenring 28 auf die Kugelelemente 32 aufgebrachte Axialkraft 29 verteilt sich im optimalen Fall gleichmässig auf die Anzahl der Kugelelemente. Bei hohen Druckdifferenzen an der Stopfbüchsvorrichtung 22 kann die Hertzsche Pressung an den Kugelelementen 32 und vorbestimmten Auflageflächen sehr hoch sein.

Die Hertzsche Pressung $p_0$ ist geometrisch vom Kugelradius gemäß folgender Beziehung abhängig:

$$p_0 \sim r^{-\frac{2}{3}}$$

Beispiel: Wird der Kugelradius r um den Faktor 10 vergrößert, dann reduziert sich die Hertzsche Pressung $p_0$ um den Faktor 4,6.

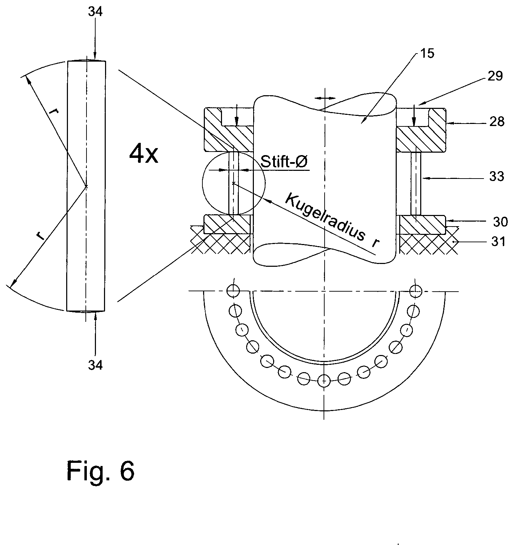

In **Fig. 6** sind sinngemäss andeutungsweise Kugelelemente 32 im Einsatz mit großem Kugeldurchmesser dargestellt. Eine große Kugel wird quasi auf einen so bezeichneten Kippstift 33 reduziert. Die Kippstifte 33 weisen jeweils eine Länge eines vorbestimmten Kugeldurchmessers auf und haben bombierte Enden 34 mit einem Radius von der halben Länge eines Kippstifts. Die Kippstifte 33 sind zwischen dem Zwischenring 28 und dem im Stopfbüchsflansch 31 befestigten Ring 30 angeordnet und um die Kolbenstange 15 planetenartig positioniert wie aus dem Halbschnitt ersichtlich. Die über den Zwischenring 28 auf die Kippstifte 33 aufgebrachte Axialkraft 29 verteilt sich im optimalen Fall gleichmässig auf die Anzahl der Kippstifte.

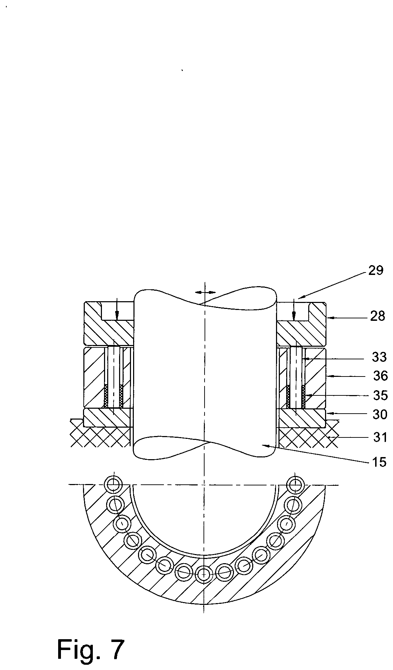

Die Kippstifte 33 sind im druckabgewandten Bereich elastisch durch ein geeignetes Elastomer 35 positioniert, z.B. ein kurzes Stück eines flexiblen Schlauchs gemäß **Fig. 2, Fig. 7.**

Der Zwischenring 28 kann gehärtet und geschliffen sein und sich mit der Stopfbüchsvorrichtung 22 querkraftfrei transversal bewegen. Die über den Zwischenring 28 ausgeübte Axialkraft 29 verteilt sich gleichmäßig auf die im Kippstiftgehäuse 36 angeordneten Kippstifte 33, die wie Kugeln zwischen dem Zwischenring 28 und dem gehärteten Ring 30 bewegbar angeordnet sind. Die Kippstifte 33 sind zwischen dem Zwischenring 28 und dem im Stopfbüchsflansch 31 befestigten Ring 30 angeordnet und um die Kolbenstange 15 planetenartig positioniert wie aus dem Halbschnitt ersichtlich.

Die Kippstifte 33 weisen eine Länge auf, die im belasteten Zustand der Kippstifte um einige μm länger sind als das Kippstiftgehäuse 36. Ein Dichtring 37 aus einem PTFE-Material ist zwischen dem Zwischenring 28 und dem Kippstiftgehäuse 36 angeordnet. Der Dichtring 37 überbrückt einen nicht dargestellten axialen Spalt zwischen dem Zwischenring 28 und dem Kippstiftgehäuse 36 und dichtet diesen Spalt ab und verhindert so einen zusätzlichen Spaltleckstrom.

Eine geringe Schiefstellung der Kolbenstange 15 kann im Zusammenhang mit einer Querbewegung der Kolbenstange auftreten. Die Stopfbüchsvorrichtung 22 lässt die Schiefstellung ohne große oder nennenswerte Krafteinwirkung zwischen Stopfbüchsvorrichtung und Kolbenstange 15 nachführen.

Ein Kompressor oder Verdichter mit einer Stopfbüchsabdichtung auf Grundlage einer Spaltringdichtung weist insbesondere folgende Vorteile auf. Bei trockenlaufenden Kompressoren oder Verdichtern werden durch hohe Kolbengeschwindigkeit vor allem Kolben- und Führungsringe sowie eine Kolbenstangendichtung durch Reibung mit einer unerwünscht hohen Temperatur belastet. Aus dem Grund wird die Lebensdauer von Dichtringen erheblich gesenkt. Bei doppeltwirkenden ein- oder mehrstufigen Kolbenverdichtern ist von in Zylindern hervorgerufenen hohen Drücken von über 150 bar bei hohen Kolbengeschwindigkeiten eine Kolbenstangendichtung dadurch bewerkstelligt, dass eine quasi berührungsfreie Strömungsdichtung mit einer Spaltringdichtung als Kolbenstangendichteinrichtung 19 ausgebildet ist.

Die Kolbenstangendichteinrichtung 19 umfasst eine besonders in einem Stopfbüchsgehäuse 21 ausgestaltete Stopfbüchsvorrichtung 22 bestehend aus Stopfbüchse 23 und Stopfbüchsmantel 24 sowie einen Zwischenring 28, einen Kippring 38 und Kippstifte 33. Die besondere Ausgestaltung der Kolbenstangendichteinrichtung 19 mit einem Schrumpfverbund der Stopfbüchsvorrichtung 22 aus einem CF-PEEK-Material für die Stopfbüchse 23 und einem Stahl für den Stopfbüchsmantel 24 lässt einen Wärmeausdehnungskoeffizienten der Kolbenstange 15 nachbilden. Die Stopfbüchsvorrichtung 22 lässt sich mittels planetenartig um die Achse der Kolbenstange 15 angeordneten Kippstiften 33 querkraftfrei abstützen. Der angeordnete Kippring 38 lässt die Stopfbüchsvorrichtung 22 eine geringe Schrägstellung der Kolbenstange 15 ohne nennenswerte Krafteinwirkung nachstellen.

Aufgrund der besonderen Ausbildung der Kolbenstangedichteinrichtung 19 entfällt eine spezielle Kühlung für Zylinder- und Kolbenstangendichtung bei doppeltwirkenden ein- oder mehrstufigen Kolbenverdichtern.

## Patentansprüche

1. Kolbenverdichter umfassend ein Kurbelgehäuse (11), eine darin angeordnete Kurbelwelle (12), Pleuelstangen (13), Kreuzkopf (14) mit angeordneter Kolbenstange (15), an der mindestens ein Kolben (16) befestigt ist, der in einem Zylinder (17) trockenlaufend geführt ist, sowie Ventile (18) und mindestens eine Kolbenstangendichteinrichtung (19), die um die Kolbenstange (15) zwischen dem Zylinder (17) und dem Kurbelgehäuse (11) angeordnet ist, wobei die Kolbenstangendichteinrichtung (19) eine Stopfbüchsvorrichtung (22) umfasst, wobei die Stopfbüchsvorrichtung (22) in einem Stopfbüchsgehäuse (21) angeordnet ist, das in einem Kolbenverdichtergehäuse (20) eingebracht ist, wobei die Stopfbüchsvorrichtung (22) eine Stopfbüchse (23) und einen Stopfbüchsmantel (24) aufweist, in welchem die Stopfbüchse eingeschoben ist, wobei die Stopfbüchse (23) mit der Kolbenstange (15) einen jeweils über den gemeinsamen Längenabschnitt offenen, μm-engen Dichtspalt (25) begrenzt, der einen Spaltleckstrom (26) des verdichteten Mediums zulässt, wobei die Stopfbüchse (23) und der Stopfbüchsmantel (24) jeweils aus verschiedenen Werkstoffen bestehen, deren resultierender Wärmeausdehnungskoeffizient im wesentlichen den Wärmeausdehnungskoeffizienten des Werkstoffs der Kolbenstange (15) aufweist, wobei die Stopfbüchsvorrichtung (22) mit einem beweglichen Zwischenring (28) bündig und dicht abschließend verbunden ist, der in einer Ausnehmung des Stopfbüchsgehäuses (21) zwischen Stopfbüchsvorrichtung (22) und einem in der Ausnehmung des Stopfbüchsgehäuses angeordneten Kippstiftgehäuse (36) angebracht ist, wobei die Stopfbüchsvorrichtung (22) über den Zwischenring (28) und das Kippstiftgehäuse (36) mit einem Ring (30) in Verbindung steht, der in einer Ausnehmung eines Stopfbüchsflansches (31) angeordnet ist, der fest mit dem Stopfbüchsgehäuse (21) und dem Kolbenverdichtergehäuse (20) verbunden ist, wobei die Stopfbüchsvorrichtung (22) querkraftfrei auf dem Stopfbüchsflansch (31) mit einer Vielzahl von Kugelelementen (32/33) abgestützt ist, die um eine vertikale Achse der Kolbenstange (15) herum zwischen dem beweglichen Zwischenring (28) und dem fixierten Ring (30) angeordnet sind, und wobei die Stopfbüchsvorrichtung (22) ein Nachstellen einer Schrägstellung der Kolbenstange (15) ohne nennenswerte Krafteinwirkung der Kolbenstange auf die Stopfbüchsvorrichtung über einen in einer Ausnehmung des Zwischenringes (28) angeordneten Kippring (38) zulässt.

2. Kolbenverdichter nach Anspruch 1, wobei die Stopfbüchsvorrichtung (22) querkraftfrei auf dem Stopfbüchsflansch (31) mit einer Vielzahl von Kippstiften (33) abgestützt ist, die um eine vertikale Achse der Kolbenstange (15) zwischen dem beweglichen Zwischenring (28) und dem fixierten Ring (30) planetenartig angeordnet sind.

3. Kolbenverdichter nach Anspruch 2, wobei die Kippstifte (33) eine Länge eines vorbestimmten Kugeldurchmessers und bombierte Enden (34) mit einem Radius von der halben Länge eines Kippstiftes aufweisen.

**4.** Kolbenverdichter nach Anspruch 2, wobei die Kippstifte (33) im druckabgewandten Bereich elastisch mit einem geeigneten Elastomer (35), wie ein kurzes Stück eines flexiblen Schlauchs, ummantelt und elastisch positioniert sind.

**5.** Kolbenverdichter nach Anspruch 1, wobei die Stopfbüchsvorrichtung (22) mit dem Zwischenring (28) bündig und dicht abschließend über einen in einer Nut in einer Stirnfläche des Kippstiftgehäuses (36) angeordneten Dichtring (37) verbunden ist.

**6.** Kolbenverdichter nach Anspruch 5, wobei der Zwischenring (28) gehärtet und geschliffen ist und sich mit der Stopfbüchsvorrichtung (22) querkraftfrei transversal bewegen lässt.

**7.** Kolbenverdichter nach Anspruch 6, wobei der Zwischenring (28) eine auf die Stopfbüchsvorrichtung (22) ausgeübte Axialkraft (29) auf die Kippstifte (33) übertragen lässt, die wie Kugelelemente (32) zwischen dem Zwischenring (28) und dem gehärteten Ring (30) bewegbar angeordnet sind.

**8.** Kolbenverdichter nach Anspruch 1, wobei der Kippring (38) auf seinen Stirnseiten (39) einen sehr großen Wölbungsradius (40) aufweist, der tonnenartig gewölbt ist, wobei die Achsen der Tonnenwölbungen auf beiden Stirnseiten des Kipprings um 90° gegeneinander versetzt sind.

**9.** Kolbenverdichter nach Anspruch 7, wobei der Kippring (38) die Stopfbüchsvorrichtung (22) eine Schiefstellung der Kolbenstange (15) durch eine Querbewegung der Kolbenstange ohne eine nennenswerte Krafteinwirkung zwischen der Stopfbüchsvorrichtung und der Kolbenstange nachführen lässt.

**10.** Kolbenverdichter nach Anspruch 7, wobei der Kippring (38) geringe Nickbewegungen der Stopfbüchsvorrichtung (22) in alle Richtungen zulässt.

**Claims**

**1.** A piston compressor comprising a crankcase (11), a crankshaft (12) arranged therein, connecting rods (13), a crosshead (14) with a piston rod (15) arranged thereon, on which piston rod at least one piston (16) that is guided in a cylinder (17) in a dry-running manner is fastened, as well as valves (18) and at least one piston rod sealing device (19) that is arranged around the piston rod (15) between the cylinder (17) and the crankcase (11), wherein the piston rod sealing device (19) comprises a stuffing box device (22), wherein the stuffing box device (22) is arranged in a stuffing box housing (21) that is introduced into a piston compressor housing (20), wherein the stuffing box device (22) has a stuffing box (23) and a stuffing box jacket (24), into which the stuffing box is inserted, wherein the stuffing box (23) with the piston rod (15) delimits a $\mu$m-tight sealing gap (25) that respectively is open over the common length section and allows a gap leakage flow (26) of the compressed medium, wherein the stuffing box (23) and the stuffing box jacket (24) respectively consist of different materials, the resulting coefficient of thermal expansion of which essentially is the same as the coefficient of thermal expansion of the material of the piston rod (15), wherein the stuffing box device (22) is flushly and tightly connected to a movable intermediate ring (28) that is mounted in a recess of the stuffing box housing (21) between the stuffing box device (22) and a tilting pin housing (36) arranged in the recess of the stuffing box housing, wherein the stuffing box device (22) is connected to a ring (30), which is arranged in a recess of a stuffing box flange (31) that is rigidly connected to the stuffing box housing (21) and the piston compressor housing (20), by means of the intermediate ring (28) and the tilting pin housing (36), wherein the stuffing box device (22) is supported on the stuffing box flange (31) without any lateral force by means of a plurality of ball elements (32/33) that are arranged around a vertical axis of the piston rod (15) between the movable intermediate ring (28) and the fixed ring (30), and wherein the stuffing box device (22) allows a readjustment of an inclined position of the piston rod (15) without the piston rod exerting a noteworthy force upon the stuffing box device by means of a tilting ring (38) arranged in a recess of the intermediate ring (28).

**2.** The piston compressor according to claim 1, wherein the stuffing box device (22) is supported on the stuffing box flange (31) without any lateral force by means of a plurality of tilting pins (33) that are arranged in a planetary manner around a vertical axis of the piston rod (15) between the movable intermediate ring (28) and the fixed ring (30).

**3.** The piston compressor according to claim 2, wherein the tilting pins (33) have a length of a predetermined ball diameter and crowned ends (34) with a radius of half the length of a tilting pin.

**4.** The piston compressor according to claim 2, wherein the tilting pins (33) are elastically sheathed with a suitable elastomer (35), e.g. a short piece of a flexible hose, in the region facing away from the pressure, and wherein the tilting pins are elastically positioned.

**5.** The piston compressor according to claim 1, wherein the stuffing box device (22) is flushly and tightly connected to the intermediate ring (28) by means of a sealing ring (37) arranged in a groove in an end face of the tilting pin housing (36).

6. The piston compressor according to claim 5, wherein the intermediate ring (28) is hardened and ground and can be moved transversely without any lateral force with the stuffing box device (22).

7. The piston compressor according to claim 6, wherein the intermediate ring (28) allows the transmission of an axial force (29) exerted upon the stuffing box device (22) to the tilting pins (33), which are movably arranged between the intermediate ring (28) and the hardened ring (30) like the ball elements (32).

8. The piston compressor according to claim 1, wherein the tilting ring (38) has a very large curvature radius (40), which is curved in a barrel shape, on its end faces (39), and wherein the axes of the barrel curvatures on both end faces of the tilting ring are offset relative to one another by 90°.

9. The piston compressor according to claim 7, wherein the tilting ring (38) allows the stuffing box device (22) to follow an inclination of the piston rod (15) by means of a transverse movement of the piston rod without a noteworthy force being exerted between the stuffing box device and the piston rod.

10. The piston compressor according to claim 7, wherein the tilting ring (38) allows slight pitching movements of the stuffing box device (22) in all directions.

**Revendications**

1. Compresseur à piston, comprenant un carter-moteur (11), un vilebrequin (12) placé dans celui-ci, des bielles (13), une tête de bielle (14) avec une tige de piston (15) placée, sur laquelle est fixée au moins un piston (16), qui est guidé en marche à sec dans un cylindre (17), ainsi que des soupapes (18) et au moins un système d'étanchéité (19) de la tige de piston, qui est placé autour de la tige de piston (15), entre le cylindre (17) et le carter-moteur (11), le système d'étanchéité (19) de la tige de piston comprenant un dispositif de presse-étoupe (22), le dispositif de presse-étoupe (22) étant placé dans un boîtier (21) de presse-étoupe, qui est introduit dans un carter (20) de compresseur à piston, le dispositif de presse-étoupe (22) comportant un presse-étoupe (23) et une enveloppe (24) de presse-étoupe, dans laquelle le presse-étoupe est inséré, le presse-étoupe (23) délimitant avec la tige de piston (15) une fente d'étanchéité (25) d'une étroitesse relevant des μm, respectivement ouverte sur l'ensemble de la section longitudinale, qui admet un courant de fuite (26) de la fente du fluide compressé, le presse-étoupe (23) et l'enveloppe (24) de presse-étoupe étant constitués chacun de différents matériaux, dont le coefficient de dilatation thermique résultant du matériau présente sensiblement le coefficient de dilatation thermique du matériau de la tige de piston (15), le dispositif de presse-étoupe (22) étant assemblé à fleur et de manière hermétiquement étanche avec une bague intermédiaire (28) déplaçable, qui est montée dans un évidement du boîtier (21) de presse-étoupe, entre le dispositif de presse-étoupe (22) et un boîtier (36) de goupille basculante, placé dans l'évidement du boîtier de presse-étoupe, le dispositif de presse-étoupe (22) étant en liaison par l'intermédiaire de la bague intermédiaire (28) et du boîtier (36) de goupille basculante avec une bague (30) qui est placée dans un évidement d'une bride (31) de presse-étoupe, qui est fixement reliée avec le boîtier (21) de presse-étoupe et le carter (20) de compresseur à piston, le dispositif de presse-étoupe (22) étant soutenu sans charge transversale sur la bride (31) de presse-étoupe, avec une pluralité d'éléments à billes (32/33) qui sont placés autour d'un axe vertical de la tige de piston (15), entre la bague intermédiaire (28) déplaçable et la bague (30) fixée et le dispositif de presse-étoupe (22) admettant un réajustage d'une position oblique de la tige de piston (15), sans exercice par la tige de piston d'une force significative sur le système de presse-étoupe, par l'intermédiaire d'une bague basculante (38), placée dans un évidement de la bague intermédiaire (28)

2. Compresseur à piston selon la revendication 1, le dispositif de presse-étoupe (22) étant soutenu sans contrainte transversale sur la bride (31) de presse-étoupe avec une pluralité de goupilles basculantes (33), qui sont placées sous forme planétaire autour d'un axe vertical de la tige de piston (15), entre la bague intermédiaire (28) déplaçable et la bague fixée (30).

3. Compresseur à piston selon la revendication 2, les goupilles basculantes (33) comportant une longueur d'un certain diamètre de bille et des extrémités (34) d'un rayon de la demi-longueur d'une goupille basculante.

4. Compresseur à piston selon la revendication 2, dans la zone opposée à la pression, les goupilles basculantes (33) étant élastiquement enveloppées d'un élastomère (35) adapté, tel qu'un court morceau d'un tube flexible et étant élastiquement positionnées.

5. Compresseur à piston selon la revendication 1, le dispositif de presse-étoupe (22) étant relié à fleur et de manière hermétiquement étanche avec la bague intermédiaire (28) par l'intermédiaire d'une bague d'étanchéité (37) placée dans une rainure dans une face frontale du boîtier (36) de goupille basculante.

6. Compresseur à piston selon la revendication 5, la bague intermédiaire (28) étant trempée et rectifiée et se laissant déplacer à la transversale sans force transversale avec le dispositif de presse-étoupe (22).

7. Compresseur à piston selon la revendication 6, la bague intermédiaire (28) laissant transmettre une force axiale (29) exercée sur le dispositif de presse-étoupe (22) sur les goupilles basculantes (33), qui comme des éléments à billes (32) sont placées de manière déplaçable entre la bague intermédiaire (28) et la bague (30) trempée.

8. Compresseur à piston selon la revendication 1, la bague basculante (38) présentant sur ses faces frontales (39) un rayon de courbure (40) très important, qui est recourbé à la manière d'un tonneau, les axes des courbures en tonneau étant décalés l'un par rapport à l'autre de la valeur de 90 ° sur les deux faces frontales de la bague basculante.

9. Compresseur à piston selon la revendication 7, la bague basculante (38) faisant suivre par le dispositif de presse-étoupe (22) une position oblique de la tige de piston (15) par un déplacement transversal de la tige de piston sans l'exercice d'une force significative entre le dispositif de presse-étoupe et la tige de piston.

10. Compresseur à piston selon la revendication 7, la bague basculante (38) admettant de faibles tangages du dispositif de presse-étoupe (22) dans toutes les directions.

Fig. 1

Z

26
27
15
21
22
24
23
25
19
29
28
37
33
35
36
30
20
31
41

I

I

26

Fig. 2

33

Schnitt I - I

Fig. 3

39

Schnitt A-A

R

40

Schnitt B-B

38

R

40

39

B

A

A

B

Fig. 4

29

28

32

30

31

15

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004052168 A1
- DE 102004011410 B4
- EP 2594795 A1
- DE 102013002864 A1
- WO 9831936 A1
- DE 3310184 A1